Europäisches Patentamt

European Patent Office

Office européen des brevets

(11) Veröffentlichungsnummer: **0 221 385**
**B1**

(12) # EUROPÄISCHE PATENTSCHRIFT

(45) Veröffentlichungstag der Patentschrift:
28.06.89

(51) Int. Cl.⁴: **B23B 31/16**

(21) Anmeldenummer: 86113944.2

(22) Anmeldetag: 08.10.86

(54) Bohrfutter.

(30) Priorität: 23.10.85 DE 3537685

(43) Veröffentlichungstag der Anmeldung:
13.05.87 Patentblatt 87/20

(45) Bekanntmachung des Hinweises auf die Patenterteilung:
28.06.89 Patentblatt 89/26

(84) Benannte Vertragsstaaten:
CH DE FR GB IT LI

(56) Entgegenhaltungen:
EP-A- 0 142 608
DE-A- 3 338 067
DE-A- 3 343 133

Die Akte enthält technische Angaben, die nach dem
Eingang der Anmeldung eingereicht wurden und die
nicht in dieser Patentschrift enthalten sind.

(73) Patentinhaber: Röhm, Günter Horst,
Heinrich-Röhm-Strasse 50, D-7927 Sontheim(DE)

(72) Erfinder: Röhm, Günter Horst,
Heinrich-Röhm-Strasse 50, D-7927 Sontheim(DE)

(74) Vertreter: Fay, Hermann, Dipl.-Phys. Dr.,
Ensingerstrasse 21 Postfach 1767, D-7900 Ulm
(Donau)(DE)

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische Patent
Einspruch einlegen. Der Einspruch ist schriftlich einzureichen und zu begründen. Er gilt erst als eingelegt, wenn die
Einspruchsgebühr entrichtet worden ist (Art. 99(1) Europäisches Patentübereinkommen).

## Beschreibung

Die Erfindung betrifft ein Bohrfutter, insbesondere Bohrhammerfutter, mit einem Futterkörper zum Anschluß an die Bohrspindel einer Bohr- bzw. Bohrhammermaschine, und mit axial unverstellbaren Spannbacken für den Bohrer, die in Schlitzen des Futterkörpers radial geführt und mittels eines am Futterkörper drehbar und axial ebenfalls unverschiebbar gelagerten Spannrings zentrisch zur Futterachse verstellbar sind, wozu der Spannring stirnseitig ein Plangewinde aufweist, das mit seinen Gewindegängen axial in die Schlitze vorsteht und in entsprechende Gewindeverzahnungen an den Spannbacken eingreift.

Bei einem aus der DE-PS 515 505 bekannten Bohrfutter dieser Art sind an den Schlitzwänden radiale Führungsleisten und an den Spannbacken die Führungsleisten aufnehmende Führungsnuten vorgesehen, welche die Spannbacken gegen Axialverschiebungen sichern. Der Spannring ist doppelt vorhanden, nämlich je einer an den beiden axialen Enden der Spannbacken, und jeder dieser beiden Spannringe steht über sein Plangewinde mit dem ihm zugeordneten Spannbackenende im Gewindeeingriff. Die beiden Spannringe sind durch eine sie gegen Relativverdrehungen gegeneinander sichernde Spannhülse verbunden, wobei zwischen der Spannhülse und dem spindelseitigen Spannring weitere Gewinderinge angeordnet sind, mit deren Hilfe die beiden Spannringe axial genau gegeneinander einstell- und fixierbar sind. Im Ergebnis ist die Konstruktion dieses bekannten Bohrfutters sehr aufwendig und umständlich. - Gleiches gilt für ein aus der DE-PS 306 537 bekanntes anderes Bohrfutter, bei dem der Spannring in einer Ringnut des Futterkörpers gelagert ist, der zwischen einem bohrerseitigen Flansch des Futterkörpers und einer spindelseitig auf dem Futterkörper gehaltenen Kappe ausgebildet ist. Die Spannbacken umgreifen den Spannring auf seinen beiden Axialseiten, von welchen jede ein mit den Spannbacken im Eingriff stehendes Plangewinde aufweist. Um diesen doppelseitigen Gewindeeingriff zu ermöglichen, muß der Spannring in einer zur Futterachse senkrechten Ebene geteilt sein und müssen beide Spannringteile um jeweils die Gewindeeingriffstiefe auseinander gespreizt werden können.

Der Erfindung liegt die Aufgabe zugrunde, ein Bohrfutter der eingangs genannten Art so auszubilden, daß es bei konstruktiv möglichst einfachem und leicht und schnell montierbarem Aufbau eine axial große Spannbackenlänge und damit entsprechend große Einspannlänge für den Bohrerschaft, aber dennoch eine möglichst kurze axiale Baulänge insgesamt aufweist.

Diese Aufgabe wird nach der Erfindung dadurch gelöst, daß der Futterkörper bohrerseitig etwa von der axialen Mitte der Spannbacken ausgehend bis zu seinem vorderen Ende als im Außendurchmesser verjüngter zylindrischer Kragen ausgebildet ist, daß ferner die radiale Abmessung der Spannbacken im Bereich dieses Kragens etwa auf die Wanddicke des Kragens verringert ist, so daß die Spannbacken auch in ihrer Stellung des größten Spanndurchmessers radial nicht nach außen aus dem Kragen vorstehen, und daß der einteilige Spannring auf dem Kragen gelagert und axial unverschiebbar von einem Anschlagring geführt ist, der bohrerseitig vor dem Spannring auf dem Kragen sitzt und gegen axiales Abziehen vom Kragen gesichert ist.

Da der Kragen etwa in der axialen Mitte der Spannbacken beginnt, liegt auch der Angriff des Plangewindes des Spannrings an den Spannbacken etwa in deren axialer Mitte, so daß die Spannkräfte entsprechend mittig in die Spannbacken eingeleitet und Verkantungen der Spannbacken bzw. Verklemmungen in den Schlitzen vermieden werden, obwohl der Spannring nur einseitig im Eingriff mit den Spannbacken steht. Axial übergreifen die Spannbacken im Bereich des Kragens den Spannring, so daß die axiale Spannringabmessung auf die axiale Baulänge des Spannfutters insgesamt ohne Einfluß ist. Aufgrund seines einfachen Aufbaus kann das Spannfutter kostengünstig hergestellt und montiert werden.

In bevorzugter Ausführungsform ist die Wanddicke des Kragens mindestens gleich dem radialen Verstellhub der Spannbacken zwischen dem größten und dem kleinsten Spanndurchmesser, so daß die Spannbacken in der Stellung des kleinsten Spanndurchmessers auch im Kragen radial nicht vollständig nach innen aus den Schlitzen austreten können.

Um das Bohrfutter mit Hilfe eines üblichen Spannschlüssels betätigen zu können, empfiehlt sich eine besonders einfache Anordnung, die dadurch gekennzeichnet ist, daß der Anschlagring auf dem Kragen gegen Verdrehungen gesichert und mit mindestens einer Führungsbohrung für den Spannschlüssel versehen ist, und daß der Spannring einen den Anschlagring übergreifenden Zahnkranz zum Eingriff eines am Spannschlüssel befindlichen Zahnritzels aufweist.

Weiter empfiehlt es sich, daß der Anschlagring das bohrerseitige Ende der Schlitze und der in ihnen laufenden Spannbacken axial übergreift. Der Futterkörper kann im Übergang zum Kragen eine Ringschul ter bilden, die in einer zur Futterachse senkrechten Ebene liegt und eine dem Anschlagring gegenüberliegende axiale Führungsfläche für den Spannring bildet. Zweckmäßig besitzen der Futterkörper und der Spannring axial beidseits der Spannbacken denselben Außendurchmesser.

Schließlich ist eine bevorzugte Ausführungsform der Erfindung dadurch gekennzeichnet, daß die Schlitze bis zum vorderen Ende des Kragens verlaufen. Das vereinfacht besonders die Herstellung der Schlitze im Futterkörper und ermöglicht bei der Montage das Einsetzen der Spannbacken in die Schlitze axial vom bohrerseitigen Futterkörperende her. Der den Kragen umschließende Anschlagring verhindert, daß sich der Kragen zwischen den Schlitzen radial aufweiten kann, wodurch die Führung der Spannbacken in den dann entsprechend auseinander gespreizten Schlitzen beeinträchtigt würde.

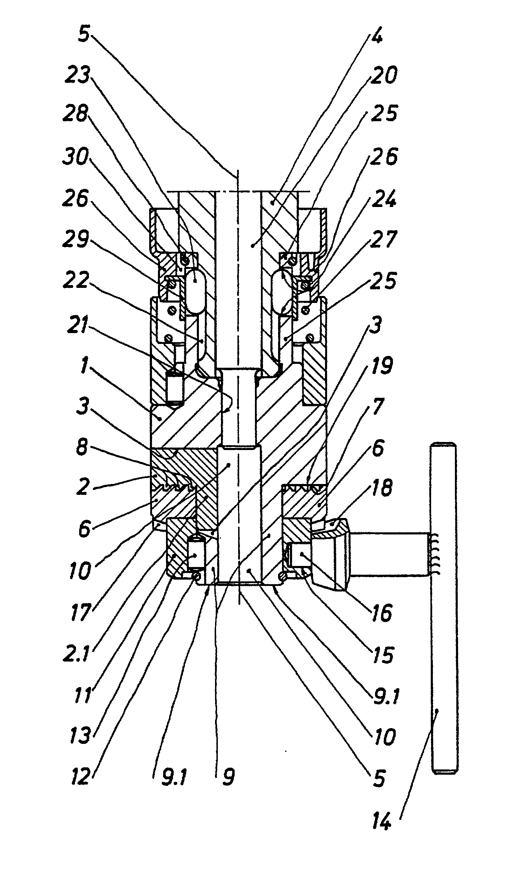

Im folgenden wird die Erfindung an einem in der Zeichnung dargestellten Ausführungsbeispiel nä-

her erläutert. Die einzige Figur zeigt einen Axialschnitt durch ein erfindungsgemäßes Bohrhammerfutter.

In der Zeichnung ist der Futterkörper mit 1 bezeichnet und in noch näher zu beschreibender Weise zum Anschluß an die Bohrspindel 4 einer nicht dargestellten Bohrhammermaschine eingerichtet. Die axial unverstellbaren Spannbacken für den ebenfalls nicht darge stellten Bohrer sind mit 2 bezeichnet, wobei dem Ausführungsbeispiel der Fall eines Bohrhammerfutters mit drei Spannbacken zu Grunde liegt, von welchen in dem in der Zeichnung dargestellten Axialschnitt nur eine Spannbacke ersichtlich ist. Die Spannbacken 2 sind in Schlitzen 3 des Futterkörpers 1 radial geführt und in den Schlitzen 3 zentrisch zur Futterachse 5 verstellbar, wozu ein am Futterkörper 1 drehbar gelagerter und axial unverschiebbarer Spannring 6 vorgesehen ist. Der Spannring 6 besitzt stirnseitig ein Plangewinde 7, das mit seinen Gewindegängen axial in die Schlitze 3 vorsteht und in entsprechende Gewindeverzahnungen 8 an den Spannbacken 2 eingreift. Wird der Spannring 6 verdreht, verschieben sich je nach Drehrichtung die Spannbacken 2 in ihren Schlitzen 3 radial ein- oder auswärts. Der Futterkörper 1 ist bohrerseitig etwa von der axialen Mitte der Spannbacken 2 ausgehend bis zu seinem vorderen Ende als im Außendurchmesser verjüngter zylindrischer Kragen 9 ausgebildet, in dessen Wandung sich die Schlitze 3 axial nach vorn bis zum Kragenende 9.1 fortsetzen. Die radiale Abmessung der Spannbacken 2 im Bereich des Kragens 9 ist etwa auf dessen Wanddicke verringert, so daß dort die Spannbacken 2 radial schmalere Schenkel 2.1 bilden, die auch in der dem größten Spanndurchmesser entsprechenden Stellung der Spannbacken radial nicht nach außen aus dem Kragen 9 vorstehen, wie es aus der Zeichnung ersichtlich ist, die das Spannfutter in dieser dem größten Spanndurchmesser entsprechenden Spannbackenstellung zeigt, in der die Spannbacken 2 vollständig aus der vom Futterkörper 1 gebildeten Bohreraufnahme 10 zurückgezogen sind. Der einteilige Spannring 6 ist auf dem Kragen 9 gelagert und axial unverschiebbar von einem Anschlagring 11 geführt, der bohrerseitig vor dem Spannring 6 auf dem Kragen 9 sitzt und durch einen in einer Ringnut an der äußeren Mantelfläche des Kragens 9 gehaltenen Sprengring 12 gegen axiales Abziehen vom Kragen 9 gesichert ist. Die Wanddicke des Kragens 9 ist mindestens gleich dem radialen Verstellhub der Spannbacken 2 zwischen dem größten und dem kleinsten Spanndurchmesser, so daß die Spannbacken 2 in der Stellung des kleinsten Spanndurchmessers auch im Kragen 9 mit ihren Schenkeln 2.1 nicht radial vollständig aus den Schlitzen 3 nach innen austreten können, also in jeder Spannbackenstellung die Führung der Spannbacken 2 an den Schlitzseitenwänden über die gesamte axiale Spannbackenhöhe immer erhalten bleibt. Im Ausführungsbeispiel ist der Anschlagring 11 auf dem Kragen 9 auch gegen Verdrehungen gesichert, wozu am Kragen 9 und am Anschlagring 11 sich gegenüber liegende Axialnuten vorgesehen sind, in die ein in beide Nuten greifender Stift 13 eingesetzt ist, der seine Sicherung axial ebenfalls durch den Sprengring 12 erfährt. Der so gesicherte Anschlagring 11 kann zum Ansetzen eines üblichen, in der Zeichnung mit 14 bezeichneten Spannschlüssels dienen. Dazu ist der Anschlagring 11 mit mindestens einer Führungsbohrung 15 für den Führungszapfen 16 des Spannschlüssels 14 versehen. Der Spannring 6 besitzt einen den Anschlagring 11 übergreifenden Zahnkranz 17, in den das Zahnritzel 18 des Spannschlüssels 14 eingreifen kann.

Das bohrerseitige Ende der Schlitze 3 und der in ihnen laufenden Spannbacken 2 wird vom Anschlagring 11 axial übergriffen. Der Futterkörper 1 bildet im Übergang zum Kragen 9 eine Ringschulter 19, die in einer zur Futterachse 5 senkrechten Ebene liegt und eine dem Anschlagring 11 gegenüberliegende axiale Führungsfläche für die Gewindeseite des Spannrings 6 darstellt. Der Futterkörper 1 und der Spannring 6 besitzen axial beidseits der Spannbacken 2 denselben Außendurchmesser. Der den Kragen 9 umschließende Anschlagring 11 verhindert, daß sich der Kragen 9 in den Schlitzen 3 aufweiten kann, so daß die Führung der Spannbacken 2 in den Schlitzen 3 nicht beeinträchtigt werden kann.

Innerhalb der Bohrspindel 4 befindet sich in bekannter Weise ein die Schlagbeanspruchung des Bohrers ausübender Döpper 20, der einen im Futterkörper 1 vorgesehenen Durchbruch 21 durchgreift, so daß er unmittelbar auf das Ende des in der Bohreraufnahme befindlichen, in der Zeichnung nicht dargestellten Bohrers einwirken kann. Damit diese Schlagwirkung nicht durch das Bohrfutter beeinträchtigt wird, besitzt das Bohrfutter gegenüber der Bohrspindel 4 einen axial freien Verschiebungshub. Dazu sind in der Umfangsfläche der Bohrspindel 4 Längsnuten 22 vorgesehen, in die axial kürzere Kupplungskörper 23 eingreifen, welche in radial verstellbar in Fenstern 24 einer hülsenartigen Fortsetzung 25 des Futterkörpers 1 angeordnet sind. Die Kupplungskörper 23 werden durch einen Kupplungsring 26 im Eingriff in den Längsnuten 22 gehalten, solange eine den Kupplungsring 26 axial in Richtung zur Spindel 4 hin beaufschlagende Feder 27 den Kupplungsring 26 in der Zeichnung axial nach oben bis zum Anschlag gegen einen am Futterkörper 1 gehaltenen Sprengring 28 drückt. Wird der Kupplungsring 26 gegen die Kraft der Feder 27 in der Zeichnung axial abwärts gedrückt, gibt der Kupplungsring 26 mit seiner sonst die Kupplungskörper 23 in den Längsnuten 22 haltenden Anschlaghülse 29 die Kupplungskörper 23 frei, so daß sie sich innerhalb der Fenster 24 radial auswärts in Taschen 30 des Kupplungsringes 26 verschieben können, bis sie aus den Längsnuten 22 der Bohrspindel 4 vollständig ausgetreten sind und das Bohrfutter im Ergebnis von der Bohrspindel 4 axial nach vorn abgezogen werden kann.

## Patentansprüche

1. Bohrfutter, insbesondere Bohrhammerfutter, mit einem Futterkörper (1) zum Anschluß an die Bohrspindel (4) einer Bohr- bzw. Bohrhammermaschine, und mit axial unverstellbaren Spannbacken (2) für den Bohrer, die in Schlitzen (3) des Futterkörpers (1) radial geführt und mittels eines am Futterkörper (1) drehbar und axial ebenfalls unverschiebbar gelagerten Spannrings (6) zentrisch zur Futterachse (5) verstellbar sind, wozu der Spannring (6) stirnseitig ein Plangewinde (7) aufweist, das mit seinen Gewindegängen axial in die Schlitze (3) vorsteht und in entsprechende Gewindeverzahnungen (8) an den Spannbacken (2) eingreift, dadurch gekennzeichnet, daß der Futterkörper (1) bohrerseitig etwa von der axialen Mitte der Spannbacken (2) ausgehend bis zu seinem vorderen Ende als im Außendurchmesser verjüngter zylindrischer Kragen (9) ausgebildet ist, daß ferner die radiale Abmessung der Spannbacken (2) im Bereich dieses Kragens (9) etwa auf die Wanddicke des Kragens (9) verringert ist, so daß die Spannbacken (2) auch in ihrer Stellung des größten Spanndurchmessers radial nicht aus dem Kragen (9) vorstehen, und daß der einteilige Spannring (6) auf dem Kragen (9) gelagert und axial unverschiebbar von einem Anschlagring (11) geführt ist, der bohrerseitig vor dem Spannring (6) auf dem Kragen (9) sitzt und gegen axiales Abziehen vom Kragen (9) gesichert ist.

2. Bohrfutter nach Anspruch 1, dadurch gekennzeichnet, daß die Wanddicke des Kragens (9) mindestens gleich dem radialen Verstellhub der Spannbacken (2) zwischen dem größten und dem kleinsten Spanndurchmesser ist, so daß die Spannbacken (2) in der Stellung des kleinsten Spanndurchmessers auch im Kragen (9) radial nicht vollständig nach innen aus den Schlitzen (3) austreten können.

3. Bohrfutter nach Anspruch 1 oder 2, dadurch gekennzeichnet, daß der Anschlagring (11) auf dem Kragen (9) gegen Verdrehungen gesichert und mit mindestens einer Führungsbohrung (15) für einen Spannschlüssel (14) versehen ist, und daß der Spannring (6) einen den Anschlagring (11) übergreifenden Zahnkranz (17) zum Eingriff eines am Spannschlüssel (14) befindlichen Zahnritzels (18) aufweist.

4. Bohrfutter nach einem der Ansprüche 1 bis 3, dadurch gekennzeichnet, daß der Anschlagring (11) das bohrerseitige Ende der Schlitze (3) und der in ihnen laufenden Spannbacken (2) axial übergreift.

5. Bohrfutter nach einem der Ansprüche 1 bis 4, dadurch gekennzeichnet, daß der Futterkörper (1) im Übergang zum Kragen (9) eine Ringschulter (19) bildet, die in einer zur Futterachse (5) senkrechten Ebene liegt und eine dem Anschlagring (11) gegenüber liegende axiale Führungsfläche für den Spannring (6) bildet.

6. Bohrfutter nach einem der Ansprüche 1 bis 5, dadurch gekennzeichnet, daß der Futterkörper (1) und der Spannring (6) axial beidseits der Spannbacken (2) denselben Außendurchmesser besitzen.

7. Bohrfutter nach einem der Ansprüche 1 bis 6, dadurch gekennzeichnet, daß die Schlitze (3) bis zum vorderen Ende (9.1) des Kragens (9) verlaufen.

## Claims

1. Drill chuck, in particular a hammer drill chuck, comprising a chuck body (1) for connection to the drilling spindle (4) of a drilling machine or hammer drill machine, and having axially immovable chuck jaws (2) for the drill, said chuck jaws (2) being radially guided in slots (3) in the chuck body (1), and radially adjustable with respect to the chuck axis (5) by means of a clamping ring (6) which is pivoted on to the chuck body (1) and is also axially immovable, the clamping ring (6) having a screw thread (7) on its end face which projects axially into the slot (3) and engages into associated threaded teeth (8) on the chuck jaws (2), characterised in that the chuck body (1), on the drill side and approximately from the axial centre of the chuck jaws (2) to its front end, is in the form of a cylindrical collar (9) having a tapering external diameter, that furthermore, in the region of this collar (9), the radial dimension of the chuck jaws (2) is reduced to approximately the wall thickness of the collar (9), so that even in the position corresponding to the largest chucking capacity, the chuck jaws (2) do not project radially outwards from the collar (9), and that the one-piece clamping ring (6) is mounted on the collar (9) and is guided axially immovably by a stop ring (11) which rests on the collar (9) on the drill side in front of the clamping ring (6), the collar (9) preventing axial loosening of the ring (6).

2. Drill chuck according to claim 1, characterised in that the wall thickness of the collar (9) is at least equal to the radial displacement of the chuck jaws (2) between the largest and smallest gripping diameter, so that in the position corresponding to the smallest chucking capacity, even in the collar (9), the chuck jaws cannot project completely radially inwards from the slots (3).

3. Drill chuck according to claim 1 or 2, characterised in that the stop ring (11) on the collar (9) is secured against twisting and is provided with at least one guide hole (15) for a tightening key (14), and that the clamping ring (6) has a toothed rim (17) engaging over the stop ring (11) for engagement with a pinion (18) disposed on the tightening key (14).

4. Drill chuck according to any of claims 1 to 3, characterised in that the stop ring (11) engages axially over the ends of the slots (3) at the drill side and the chuck jaws (2) running therein.

5. Drill chuck according to any of claims 1 to 4, characterised in that in the transition to the collar (9), the chuck body (1) forms an annular shoulder (19) which lies in a plane perpendicular to the chuck axis (5) and forms an axial guide surface for the clamping ring (6) opposite the stop ring (11).

6. Drill chuck according to any of claims 1 to 5, characterised in that the chuck body (1) and the clamping ring (6) have the same external diameter axially on both sides of the chuck jaws (2).

7. Drill chuck according to any of claims 1 to 6, characterised in that the slots (3) extend to the front end (9.1) of the collar (9).

## Revendications

1. Mandrin porte-foret, en particulier mandrin de marteau perforateur, comprenant un corps de mandrin de marteau perforateur, comprenant un corps de mandrin (1) pour le raccordement à la broche de perçage (4) d'une perceuse et respectivement d'un marteau perforateur, et des mâchoires de serrage

(2) axialement fixes pour le foret, qui sont guidées radialement dans des fentes (3) du corps de mandrin (1) et déplaçables concentriquement à l'axe (5) du mandrin au moyen d'une bague de serrage (6) qui est montée de manière tournante sur le corps de mandrin (1) et également immobile dans le sens axial, la bague de serrage (6) présentant à cet effet à la face frontale un filet rectangulaire (7) dont les pas de vis dépassent axialement dans les fentes (3) et s'engrènent avec des dentures de filetage (8) correspondantes sur les mâchoires de serrage (2), caractérisé par le fait que, du côté foret, le corps de mandrin (1) est réalisé, approximativement à partir du centre axial des mâchoires de serrage (2) et jusqu'à son extrémité antérieure, sous la forme d'un collet cylindrique (9) avec réduction de son diamètre extérieur; que, en outre, la dimension radiale des mâchoires de serrage (2) dans la région de ce collet (9) est réduite approximativement à l'épaisseur de la paroi dudit collet (9) de sorte que, même dans leurs position correspondant au diamètre de serrage maximum, les mâchoires de serrage (2) ne dépassent pas radialement vers l'extérieur dudit collet (9); et que la bague de serrage (6) réalisée en une seule pièce est montée sur le collet (9) et guidée, de manière immobile dans le sens axial, par une bague de butée (11) qui est montée sur le collet (9) du côté foret, en avant de la bague de serrage (6), et bloquée de façon à empêcher son retrait axial du collet (9).

2. Mandrin porte-foret selon la revendication 1, caractérisé par le fait que l'épaisseur de paroi du collet (9) est au moins égale à la course de réglage radiale des mâchoires de serrage (2) entre les diamètres de serrage maximum et minimum de sorte que, même dans le collet (9), les mâchoires de serrage (2) ne peuvent entièrement sortir radialement vers l'intérieur des fentes (3) lorsqu'elles se trouvent dans la position correspondant au diamètre de serrage minimum.

3. Mandrin porte-foret selon l'une des revendications 1 ou 2, caractérisé par le fait que la bague de butée (11) est bloquée en rotation sur le collet (9) et munie d'au moins un alésage de guidage (15) pour une clé de serrage (14), et que la bague de serrage (6) comprend une couronne dentée (17) recouvrant la bague de butée (11) pour l'engrènement d'un pignon (18) prévu sur la clé de serrage (14).

4. Mandrin porte-foret selon l'une quelconque des revendications 1 à 3, caractérisé par le fait que la bague de butée (11) recouvre axialement l'extrémité des fentes (3) du côté foret et des mâchoires de serrage (2) se déplaçant dans celles-ci.

5. Mandrin porte-foret selon l'une quelconque des revendications 1 à 4, caractérisé par le fait que le corps de mandrin (1) forme, dans la zone de transition au collet (9), un épaulement annulaire (19) situé dans un plan perpendiculaire à l'axe (5) du mandrin et constituant, en face de la bague de butée (11), une surface de guidage axiale pour la bague de serrage (6).

6. Mandrin porte-foret selon l'une quelconque des revendications 1 à 5, caractérisé par le fait que, axialement de part et d'autre des mâchoires de serrage (2), le corps de mandrin (1) et la bague de serrage (6) présentent le même diamètre extérieur.

7. Mandrin porte-foret selon l'une quelconque des revendications 1 à 6, caractérisé par le fait que les fentes (3) s'étendent jusqu'à l'extrémité antérieure (9.1) du collet (9).